# EUROPÄISCHE PATENTSCHRIFT

(11) **EP 2 694 900 B1**
(45) Veröffentlichungstag und Bekanntmachung des Hinweises auf die Patenterteilung: **23.03.2016**
(21) Anmeldenummer: 12715046.4
(22) Anmeldetag: 05.04.2012
(51) Int. Cl.: F26B 13/16, D06B 19/00, F26B 23/00

(54) **TROCKNER FÜR EINE TEXTILE WARENBAHN**
DRYER FOR A TEXTILE MATERIAL WEB
DISPOSITIF DE SÉCHAGE POUR UNE BANDE EN MATIÈRE TEXTILE

(30) Priorität: 08.04.2011 DE 202011005041 U
(43) Veröffentlichungstag der Anmeldung: 12.02.2014
(73) Patentinhaber: Trützschler Nonwovens GmbH, 63329 Egelsbach (DE)
(72) Erfinder: HAJDU, Stephan, 63322 Rödermark (DE)
(74) Vertreter: von Kreisler Selting Werner - Partnerschaft von Patentanwälten und Rechtsanwälten mbB
(86) Internationale Anmeldenummer: PCT/EP2012/056348
(87) Internationale Veröffentlichungsnummer: WO 2012/136802

(56) Entgegenhaltungen:
- DE-A1- 2 137 377
- DE-A1- 4 016 921
- DE-A1- 19 651 191
- DE-A1-102009 016 019
- DE-B- 1 103 876
- DE-U1- 9 210 310
- US-A- 3 178 831

## Beschreibung

Die Erfindung betrifft einen Trockner für eine textile Warenbahn nach dem Oberbegriff von Anspruch 1.

Mittels Trocknereinrichtungen erfolgt das Abführen von Feuchtigkeit einer durch den Trockner geförderten textilen Warenbahn. Bekannte Trocknereinrichtungen in Reihenbauweise weisen mehrere hintereinander angeordnete luftdurchlässige Trommeln, Durchströmtrommeln auf, um welche die zu trocknende Warenbahn geführt wird. Durch den Trommeln zugeordnete Ventilatoren wird in den Trommeln ein Saugzug erzeugt, durch den die die Trommeln umschlingende Warenbahn durchströmt und so getrocknet wird.

Ein Reihentrockner der genannten Art ist aus der DE 199 22 429 A1 bekannt. Dieser Trockner weist einen die Trommeln aufnehmenden Behandlungsraum sowie einen Ventilatorraum für die axial den Trommeln zugeordneten Ventilatoren auf. Die aus den Trommeln abgesaugte Luft wird im Ventilatorraum mit einer Heizeinrichtung wieder erwärmt und in den Behandlungsraum geleitet.

Damit die von der Warenbahn aufgenommene Feuchtigkeit nicht zu einer Sättigung der umgewälzten Luft führt, wird ein Teil der aus der Trommel abgesaugten Luft abgeführt und durch trockene Frischluft ersetzt. Der Reihentrockner nach der DE 199 22 429 A1 weist zur Abfuhr von Feuchtluft einen entsprechenden Anschlussstutzen auf.

Aus der DE 10 2009 016 019 A1 ist ein Trockner bekannt, der eine Absaugung für Abluft sowie eine Frischluftzufuhr aufweist. Die Abluft wird durch einen Wärmetauscher geleitet und gibt dort einen Teil der Wärmemenge an den Frischluftstrom ab, der dem Trockenraum des Trockners zugeführt wird.

Die vorliegende Erfindung geht somit von den Merkmalen des Oberbegriffs des Anspruchs 1 aus.

Aufgabe der vorliegenden Erfindung ist es, eine gattungsgemäße Einrichtung zu verbessern.

Gelöst wird diese Aufgabe durch die Merkmale des Vorrichtungsanspruches. Vorteilhafte Weiterbildungen der Erfindung ergeben sich aus den Unteransprüchen.

Erfindungsgemäß ist ein Trockner für eine textile Warenbahn vorgesehen, der neben den gattungsgemäßen Merkmalen Folgendes aufweist:
- das Absaugen der Abluft ist über einen innerhalb des Behandlungsraumes im nicht von der Warenbahn umschlungenen Bereich bis an den Außenumfang der Trommel herangeführten Luftschacht realisiert, wobei
die innerhalb der Trommel angeordnete Abschattung korrespondierend zum Luftschacht der Absaugung einen Durchlass aufweist.

Vorzugsweise erfolgt die Absaugung der Abluft an der ersten Trommel, da hier die durch die Warenbahn gesaugte Luft eine große Feuchtigkeitsmenge aufnimmt. Durch diese Feuchtigkeitsmenge besitzt die Abluft eine hohe nutzbare Wärmemenge, welche über den Wärmetauscher an den Frischluftstrom abgegeben wird.

Durch die Übertragung der in der Abluft der ersten Trommel befindlichen Wärmemenge an die Frischluft, welche im Behandlungsraum bevorzugt der letzten Trommel zugeführt wird, ergibt sich eine Reduktion der Heizenergie, welche zur Erwärmung in den Behandlungsraum rückgeführten Luft nötig ist.

Nach der Erfindung sind grundsätzlich die folgenden Möglichkeiten ausführbar:
- Die Abluft wird aus einer der vorderen Trommeln abgesaugt, die über den Wärmetauscher vorgewärmte Frischluft wird einer, zwei oder mehreren hinteren Trommel zugeführt. Hierbei kann vorgesehen sein, dass der Grad der über den Wärmetauscher bewirkten Vorwärmung der Frischluft für die hinteren Trommeln unterschiedlich und auch einstellbar ist. Die eine, zwei oder mehreren hinteren Trommeln sind der vorderen Trommel bezogen auf die Transportrichtung der Warenbahn nachgeordnet.
- Es wird Abluft aus den ersten beiden oder auch ersten drei Trommeln abgesaugt und durch den Wärmetauscher geführt. Die über den Wärmetauscher vorgewärmte Frischluft wird einer oder mehreren der hinteren Trommeln zugeführt.
- Es wird die Abluft aus der ersten Trommel abgesaugt, durch den Wärmetauscher geführt und damit Frischluft für die letzte Trommel vorgewärmt.

Ferner ist in vorteilhafter Weise ein Verfahren zum Trocknen einer textilen Warenbahn vorgesehen, wobei
- die Warenbahn in Transportrichtung transportiert wird, wobei die Warenbahn bezogen auf die Transportrichtung nacheinander jeweils den luftdurchlässig gestalteten Außenumfang zumindest einer in Transportrichtung vorderen Trommel und zumindest einer, der zumindest einen vorderen Trommel nachgeordneten Trommel teilweise umschlingt, wobei
- die Abluft der zumindest einen vorderen Trommel abgesaugt wird und wobei Frischluft der zumindest einen, der vorderen Trommel nachgeordneten Trommel zugefügt wird, wobei
- das Absaugen der Abluft über einen innerhalb des Behandlungsraumes im nicht von der Warenbahn umschlungenen Bereich bis an den Außenumfang der Trommel herangeführten Luftschacht realisiert wird, wobei die innerhalb der Trommel angeordnete Abschattung korrespondierend zum Luftschacht der Absaugung einen Durchlass aufweist.

Die Frischluft kann vor dem Zuführen zu der zumindest einen nachgeordneten Trommel in einem Wärmetauscher mittels der Abluft aufgewärmt werden.

Des Weiteren erfolgt die Erläuterung eines Ausführungsbeispieles anhand der Zeichnung.

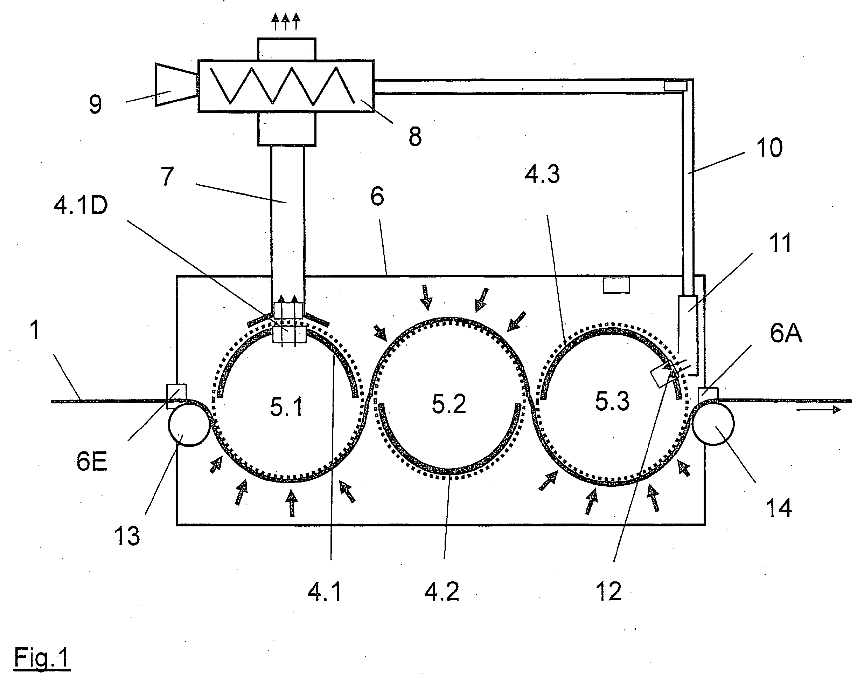

Der in der Figur 1 dargestellte Reihentrockner weist drei Durchströmtrommeln 5.1, 5.2, 5.3 auf. Die Warenbahn (das Vlies) 1 wird über eine Trommel 13 im Einlauf 6E dem Gehäuse 6 (Behandlungsraum) des Trockners zugeführt und umschlingt die Durchströmtrommeln 5.1, 5.2, 5.3, um über eine Trommel 14 im Auslauf 6A den Trockner wieder zu verlassen. Den Durchströmtrommeln 5.1, 5.2, 5.3 sind nicht mitdrehende, gehäusefest gelagerte Abschattungen (Bleche) 4.1, 4.2, 4.3 zugeordnet, welche wie bei den zuvor beschriebenen Varianten bewirken, dass die Heiße Luft im Inneren des Gehäuses 6 die Durchströmtrommeln 5.1, 5.2, 5.3 nur im Bereich der Umschlingung durch die Warenbahn 1 durchströmen kann. Die Heizeinrichtungen zur Erwärmung der Luft innerhalb des Trockners sind nicht dargestellt.

Die Durchströmtrommeln 5.1, 5.2, 5.3 weisen stirnseitig nicht dargestellte Ventilatoren auf, durch die das Innere der Trommeln 5.1, 5.2, 5.3 mit einem Unterdruck beaufschlagt werden. Durch den Unterdruck im Inneren der Durchströmtrommeln 5.1, 5.2, 5.3 wird die aufgeheizte Luft durch die poröse Warenbahn 1 in die Durchströmtrommeln 5.1, 5.2, 5.3 gesaugt.

Die innerhalb der Trommel 5.1 angeordnete Abschattung 4.1 weist einen Durchlass 4.1D auf, dem außerhalb der Trommel 5.1 das Ende ein in den Behandlungsraum 6 des Trockners reichender Luftschacht einer Absaugung 7 zugeordnet ist und mit der der Durchlass 4.1D korrespondiert. Diese Absaugung 7 ist dabei in kleinst möglichen Abstand zum Umfang der Trommel 5.1 herangeführt. Dadurch wird durch einen nicht dargestellten Unterdruckerzeuger der Absaugung 7 überwiegend die Luft aus dem Inneren der Trommel 5.1 gesaugt, der Anteil der durch die verbleibenden Spalte zwischen Trommeloberfläche, der Abschattung 4.1 und der Absaugung 7 gesaugten Luft aus dem Behandlungsraum ist vernachlässigbar.

Die in der beschriebenen Weise aus dem Inneren der ersten Trommel 5.1 abgesaugte Luft weist einen hohen Feuchtigkeitsanteil auf. Die in dieser Abluft befindliche Wärmemenge wird über einen Wärmetauscher 8 an eine über eine Frischluftansaugung 9 zugeführte Frischluft abgegeben, welche über eine Frischluftleitung 10 der letzten Trommel 5.3 des Reihentrockners zugeführt wird.

Im Inneren des Behandlungsraumes 6 ist der letzten Trommel 5.3 ein Frischluftkasten 11 zugeordnet, in welchen die Frischluftleitung mündet. Der Frischluftkasten weist einen über die Breite der Trommel 5.3 sich erstreckenden Austrittsspalt auf, dem in der innerhalb der Trommel 5.3 befindlichen Abschattung 4.3 ein korrespondierender Durchlassspalt 12 zugeordnet ist. Die über den Wärmetauscher 8 vorgewärmte Frischluft wird so durch den Unterdruck in die Trommel 5.3 geleitet.

Abschließend sei noch erwähnt, dass die Zufuhr der vorgewärmten Frischluft in die dritte, letzte Trommel 5.3 auch über eine Anordnung wie die Absaugung bei der ersten Trommel 5.1 erfolgen kann.

### Bezugszeichenliste:

- 1: Warenbahn
- 4.1: Abschattung (Blech)
- 4.1D: Durchlass (Absaugung aus Trommel 5.1)
- 4.2: Abschattung (Blech)
- 4.3: Abschattung (Blech)
- 5.1: Trommel, Durchströmtrommel
- 5.2: Trommel, Durchströmtrommel
- 5.3: Trommel, Durchströmtrommel
- 6: Gehäuse (Trockner, Trockenraum, Behandlungsraum)
- 7: Absaugung
- 8: Wärmetauscher
- 9: Frischluftansaugung
- 10: Frischluftleitung
- 11: Frischluftkasten
- 12: Durchlassspalt (4.3 Abschattung)
- 13: Trommel
- 14: Trommel
- 6E: Einlauf (Warenbahn 1)
- 6A: Auslauf (Warenbahn 1)

## Patentansprüche

1. Trockner in Reihenbauweise für eine textile Warenbahn (1), mit
- einem Behandlungsraum (6) in transportrichtung mit einer Anzahl drehbarer Trommeln (5.1-5.3) mit luftdurchlässig gestaltetem Außenumfang, wobei die Warenbahn (1) die Trommeln (5.1-5.3) jeweils teilweise umschlingt,
- den Trommeln zugeordneten Ventilatoren, durch welche diese unter Saugzug setzbar ist,
- einer Heizeinrichtung, vermittels der die aus den Trommeln (5.1-5.3) abgesaugte Luft erwärmt und in den Behandlungsraum (6) zurückführbar A ist,
- einer Absaugung (7) für Abluft,
- einer Frischluftzufuhr (9) sowie
- einem den Abluftstrom und die Frischluftzufuhr thermisch koppelnden Wärmetauscher (8),
- wobei die Abluft (7) zumindest aus einer in Transportrichtung der Warenbahn (1) vorderen Trommel (5.1) absaugbar ist und die durch den Wärmetauscher (8) aufgewärmte Frischluft (9, 10, 11) zumindest einer nachgeordneten Trommel (5.3) zuführbar ist,
**dadurch gekennzeichnet,**
**dass** das Absaugen der Abluft (7) über einen innerhalb des Behandlungsraumes (6) im nicht von der Warenbahn (1) umschlungenen Bereich bis an den Außenumfang der Trommel (5.1) herangeführten Luftschacht realisiert ist, wobei
eine innerhalb der Trommel (5.1) angeordnete Abschattung (4.1) korrespondierend zum Luftschacht der Absaugung (7) einen Durchlass (4.1D) aufweist.

2. Trockner nach Anspruch 1, **dadurch gekennzeichnet, dass** die Abluft (7) aus der in Transportrichtung ersten Trommel (5.1) absaugbar ist und die durch den Wärmetauscher (8) aufgewärmte Frischluft (9, 10, 11) der in Transportrichtung letzten Trommel (5.3) zuführbar ist.

3. Trockner nach Anspruch 1 oder 2, **dadurch gekennzeichnet, dass** die durch den Wärmetauscher (8) aufgewärmte Frischluft (9, 10, 11) der in Transportrichtung letzten Trommel (5.3) sowie einer dieser vorderen Trommel zuführbar ist.

4. Trockner nach Anspruch 3, **dadurch gekennzeichnet, dass** die durch den Wärmetauscher (8) aufgewärmte Frischluft (9, 10, 11) in einstellbaren Mengenanteil den in Transportrichtung hinteren Trommeln zuführbar ist.

5. Trockner nach einem der vorhergehenden Ansprüche, **dadurch gekennzeichnet, dass** die durch den Wärmetauscher (8) aufgewärmte Frischluft (9, 10, 11) im nicht von der Warenbahn (1) umschlungenen Bereich über einen der nachgeordneten Trommel (5.3) zugeordneten Frischluftkasten (11) dieser Trommel (5.3) zuführbar ist.

6. Trockner nach Anspruch 5, **dadurch gekennzeichnet, dass** der Frischluftkasten (11) einen über die Breite der nachgeordneten Trommel (5.3) sich erstreckenden Luftaustrittsspalt aufweist.

7. Trockner nach Anspruch 5 oder 6, **dadurch gekennzeichnet, dass** eine innerhalb der nachgeordneten Trommel (5.3) angeordnete Abschattung (4.3) korrespondierend zum Frischluftkasten (11) einen Durchlassspalt (12) aufweist.

8. Verfahren zum Trocknen einer textilen Warenbahn durch
- Transportieren der Warenbahn (1) in Transportrichtung, wobei die Warenbahn (1) bezogen auf die Transportrichtung nacheinander jeweils den luftdurchlässig gestalteten Außenumfang zumindest einer in Transportrichtung vorderen Trommel (5.1) und zumindest einer, der zumindest einen vorderen Trommel (5.1) nachgeordneten Trommel (5.2,5.3) teilweise umschlingt, wobei
- die Abluft der zumindest einen vorderen Trommel (5.1) abgesaugt wird und wobei Frischluft der zumindest einen, der vorderen Trommel (5.1) nachgeordneten Trommel (5.3) zugeführt wird,
**dadurch gekennzeichnet, dass**
die Absaugung der Abluft über einen innerhalb des Behandlungsraumes (6) im nicht von der Warenbahn (1) umschlungenen Bereich bis an den Außenumfang der Trommel (5.1) herangeführten Luftschacht realisiert wird, wobei eine innerhalb der Trommel (5.1) angeordnete Abschattung (4.1) korrespondierend zum Luftschacht der Absaugung (7) einen Durchlass (4.1D) aufweist.

9. Verfahren nach Anspruch 8, **dadurch gekennzeichnet, dass** die Frischluft vor dem Zuführen zu der zumindest einen nachgeordneten Trommel in einem Wärmetauscher mittels der Abluft aufgewärmt wird.

## Claims

1. A serial-type dryer for a textile material web (1), comprising
- a treating chamber (6) including a number of rotatable drums (5.1-5.3) with an outer circumference designed to be air-permeable, said material web (1) partly looping the drums (5.1-5.3),
- ventilators assigned to the drums, wherein the drums can be set under vacuum by the ventilators,
- a heating device, by means of which the air suctioned out of the drums (5.1-5.3) is heated and can be conducted back into the treating chamber (6),
- a suction unit (7) for exhaust air,
- a fresh air feed (9), and
- a heat exchanger (8) that thermally couples the exhaust air flow and the fresh air feed,
- wherein the exhaust air (7) can be suctioned at least out of a front drum (5.1) as viewed in the transporting direction of the material web (1), and the fresh air (9,10,11) heated by the heat exchanger (8) can be fed to at least one downstream drum (5.3).
**characterized in that**
the suctioning removal of exhaust air (7) is realized by an air shaft which, internally of the treatment chamber (6) in the area not looped by the material web (1), extends to the outer circumference of the drum (5.1), wherein
a screen (4.1) arranged within the drum (5.1) comprises a passage (4.1D) in correspondence to the air shaft of the suctional removal system (7).

2. The dryer according to claim 1, **characterized in that** the exhaust air (7) can be suctioned from the first drum (5.1) in the transporting direction and the fresh air (9,10,11) heated by the heat exchanger (8) can be fed to the last drum (5.3) in the transporting direction.

3. The dryer according to claim 1 or 2, **characterized in that** the fresh air (9,10,11) heated by the heat exchanger (8) can be fed to the last drum (5.3) in the transporting direction and to a drum upstream thereof.

4. The dryer according to claim 3, **characterized in that** the fresh air (9, 10,11) heated by the heat exchanger (8) can be supplied, in a settable quantitative proportion, to the rear drums in the transporting direction.

5. The dryer according to any one of the preceding claims, **characterized in that**, in the area which is not looped by the material web (1), the fresh air (9,10,11) heated by heat exchanger (8) can be supplied, via a fresh air box (11) assigned to said downstream drum (5.3), to this drum (5.3).

6. The dryer according to claim 5, **characterized in that** the fresh air box (11) comprises an air exit gap extending across the width of said downstream drum (5.3).

7. The dryer according to claim 5 or 6, **characterized in that** a screen (4.3) arranged within said downstream drum (5.3) comprises a passage gap (12) in correspondence to the fresh air box (11).

8. A method for drying a textile material web by
- transporting the material web (1) in the transporting direction, wherein the material web (1), as viewed in the transporting direction, is partially looping, in successive order, the respective air-permeable outer circumference of at least one front drum (5.1) in the transporting direction and at least one drum (5.2,5.3) downstream of said at least one front drum (5.1), wherein
- the exhaust air of said at least one front drum (5.1) is suctioned, and wherein fresh air is supplied to said at least one drum (5.3) downstream of said front drum (5.1),
**characterized in that**
the suctioning removal of exhaust air is realized by an air shaft which, internally of the treatment chamber (6) in the area not looped by the material web (1), extends to the outer circumference of the drum (5.1), wherein a screen (4.1) arranged within the drum (5.1) comprises a passage (4.1D) in correspondence to the air shaft of the suctional removal system (7).

9. The method according to claim 8, **characterized in that** the fresh air, before being supplied to said at least one downstream drum, is heated in a heat exchanger with the aid of the exhaust air.

## Revendications

1. Dispositif de séchage en ligne pour une bande de produit textile (1), comprenant
- un espace de traitement (6) pourvu d'un nombre donné de tambours (5.1 - 5.3) rotatifs présentant une périphérie extérieure configurée de manière perméable à l'air, sachant que la bande de produit (1) entoure respectivement en partie les tambours (5.1 - 5.3),
- des ventilateurs associés aux tambours, lesquels permettent de placer les tambours sous traction d'aspiration,
- un dispositif de chauffage, par le concours duquel l'air évacué par aspiration des tambours (5.1 - 5.3) est réchauffé et est ramené dans l'espace de traitement (6),
- une évacuation aspirante (7) pour l'air vicié,
- une arrivée d'air frais (9), ainsi
- qu'un échangeur de chaleur (8) couplant thermiquement le flux d'air vicié et l'arrivée d'air frais,
- sachant que l'air vicié (7) provenant au moins d'un tambour (5.1) avant dans la direction de transport de la bande de produit (1) peut être évacué par aspiration et que l'air frais (9, 10, 11) chauffé par l'échangeur de chaleur (8) peut être amené au moins à un tambour (5.3) disposé en aval,
**caractérisé en ce**
**que** l'évacuation par aspiration de l'air vicié (7) est réalisée par l'intermédiaire d'une bouche d'aération approchée, à l'intérieur de l'espace de traitement (6), dans la zone non entourée par la bande de produit (1) jusqu'au niveau de la périphérie extérieure du tambour (5.1), sachant
**qu'**un système occultant (4.1) disposé à l'intérieur du tambour (5.1) présente, en correspondance avec la bouche d'aération de l'évacuation aspirante (7), un passage (4.1D).

2. Dispositif de séchage selon la revendication 1, **caractérisé en ce que** l'air vicié (7) peut être évacué par aspiration du premier tambour (5.1) dans la direction de transport, et que l'air frais (9, 10, 11) chauffé par l'échangeur de chaleur (8) peut être amené au dernier tambour (5.3) dans la direction de transport.

3. Dispositif de séchage selon la revendication 1 ou 2, **caractérisé en ce que** l'air frais (9, 10, 11) chauffé par l'échangeur de chaleur (8) peut être amené au dernier tambour (5.3) dans la direction de transport ainsi qu'à un tambour précédent ce dernier.

4. Dispositif de séchage selon la revendication 3, **caractérisé en ce que** l'air frais (9, 10, 11) chauffé par l'échangeur de chaleur (8) peut être amené, en une proportion réglable, aux tambours arrière dans la direction de transport.

5. Dispositif de séchage selon l'une quelconque des revendications précédentes, **caractérisé en ce que** l'air frais (9, 10, 11) chauffé par l'échangeur de chaleur (8) peut être amené dans la zone non entourée par la bande de produit (1) par l'intermédiaire d'une boîte d'air frais (11) associée au tambour (5.3) disposé en aval, audit tambour (5.3).

6. Dispositif de séchage selon la revendication 5, **caractérisé en ce que** la boîte d'air frais (11) présente une fente de sortie d'air s'étendant sur la largeur du tambour (5.3) disposé en aval.

7. Dispositif de séchage selon la revendication 5 ou 6, **caractérisé en ce qu'**un système occultant (4.3) disposé à l'intérieur du tambour (5.3) disposé en aval présente, en correspondance avec la boîte d'air frais (11), une fente de passage (12).

8. Procédé servant à sécher une bande de produit textile en
- transportant la bande de produit (1) dans la direction de transport, sachant que la bande de produit (1) entoure en partie, par rapport à la direction de transport, de manière consécutive, respectivement la périphérie extérieure configurée de manière perméable à l'air au moins d'un tambour (5.1) avant dans la direction de transport et au moins d'un tambour (5.2, 5.3) disposé en aval du tambour avant (5.1) au moins au nombre de un, sachant
- que l'air vicié du tambour (5.1) avant au moins au nombre de un est évacué par aspiration et que l'air frais est amené au tambour (5.3) au moins au nombre de un disposé en aval du tambour (5.1) avant,
**caractérisé en ce**
**que** l'évacuation par aspiration de l'air vicié est réalisé par l'intermédiaire d'une bouche d'aération approchée à l'intérieur de l'espace de traitement (6) dans la zone non entourée par la bande de produit (1) jusqu'à la périphérie extérieure du tambour (5.1), sachant qu'un système occultant (4.1) disposé à l'intérieur du tambour (5.1) présente, en correspondance avec la bouche d'aération de l'évacuation aspirante (7), un passage (4.1D).

9. Procédé selon la revendication 8, **caractérisé en ce que** l'air frais est chauffé au moyen de l'air vicié avant d'être amené au tambour disposé en aval au moins au nombre de un dans un échangeur de chaleur.
